Europäisches Patentamt

European Patent Office

Office européen des brevets

(11) Publication number: **0 212 749**
A1

## (12) EUROPEAN PATENT APPLICATION

(21) Application number: **86201396.8**

(51) Int. Cl.⁴: **F 24 F 13/065**, F 24 F 13/00

(22) Date of filing: **07.08.86**

(30) Priority: **09.08.85 NL 8502216**

(43) Date of publication of application: **04.03.87**
**Bulletin 87/10**

(84) Designated Contracting States: **AT BE CH DE FR GB IT LI LU NL SE**

(71) Applicant: **WATERLOO B.V.,**
**Postbus 28 Industriestraat 3, NL-7450 AA Holten (NL)**

(72) Inventor: **Adam, Jakob, Jahnstrasse 2, D-6300 Giessen (DE)**

(74) Representative: **van der Beek, George Frans et al, Nederlandsch Octrooibureau Johan de Wittlaan 15 P.O. Box 29720, NL-2502 LS 's-Gravenhage (NL)**

(54) **Air blow in device for ventilating air.**

(57) In an air ventilating device air jets are blown into the room to be ventilated through nozzle elements (4) each comprising a pipe (6) surrounded by a cylindrical or spherical part (5), taken up movably for rotation in sockets in the wall of an air supply box (15). The air passages through the pipes (6) and parts (5) are considerably longer than the diameter of said parts (5).

EP 0 212 749 A1

Air-blow in device for ventilating air

The invention relates to an air blow-in device for ventilating air, comprising an air supply box with air blow-out openings to a room to be ventilated, with nozzles forming the blow-out openings the setting of which can be adjusted by turning. Such devices are known in all kinds of embodiments, for example in aeroplanes, where spherical elements can be turned in all directions to cause air jets to emerge in any desired direction through a duct in said elements.

The invention aims at the provision of such a device, which is better suited for exclusively ventilating rooms by such devices (which is different from the application thereof in aeroplanes etc.). The invention thus relates in particular to ventilation devices which are intended to make the jets of air exert a substantial degree of induction on the air in the room to be ventilated. With the current trend towards saving energy, one wants to take as little air as possible into the room to be ventilated, i.e. to apply a small number of total replacements of the air in the room per unit time. To reach sufficient ventilation in this way while maintaining comfort for the people present in the room the velocity of the air jets blown into the room should be rather high, but such greater velocities produce great noise in and near the nozzles.

The object of the invention is therefore to produce an improvement herein and to produce a device of the type referred to, which avoids this disadvantage with a practical design.

To this end a device of the type referred to in the preamble is according to the invention characterized in that the rotatable nozzles are formed by a pipe for the air and thereon a cylindrical or spherical part, incorporated in guiding fashion in a part of or on the said air supply box, said pipe being much greater in length than the diameter of said cylindrical or spherical part.

With greater air velocities in particular it is important that the pipe through the nozzle should be fairly long. In terms of design, it is, however, difficult to give the spherical or cylindrical element a large diameter. In the room to be ventilated one generally wants to use as small as possible and reasonably attractive suspended parts - or parts incorporated in the ceiling - for the ventilation. In addition to noise reduction, the invention now gives great freedom of design and a cost saving through the small curved part which is used for the rotatable mounting.

In practice, lengths of pipes forming the nozzles of at least one and a half times the diameter of the spherical or cylindrical part are often used. Depending on the air exit velocity, those pipes must be longer for a higher velocity.

With the use of the invention, the spherical or cylindrical part has a relatively small diameter, which facilitates its accomodation in guiding fashion in the air box, as will be described below. In a practical embodiment the diameter is, for example, only 25 mm, with the length of the nozzle pipe, for example, 40 mm or even considerably longer.

The object of the invention is then to produce a construction for such devices which can easily be fitted in great lengths, normally along and/or in ceilings. Use of the invention in small individual units is, however, also possible.

In general, in ventilation systems of the type referred to there is a preference for using openings with approximately the same cross dimensions in all directions, rather than longer grooves, as outlet openings for the air. This gives better allround induction of the air in the room in which those outlet openings blow out air.

It has already been proposed to use the nozzles of the type mentioned in the preamble and adjustable by turning for the total ventilation of spaces, as appears from FR-A-2 374 597 and FR-A-2 813 940. These known devices are, however, unsuited for applying the above-mentioned principle with high air velocities in view of much annoying noise generation. The adjustability of the angle at which the air is blown into the room is in many instances required, as e.g. in part mentioned in said FR-A-2 813 940, e.g. to adapt this angle to different situations of cooling or heating by said air, to adapt this angle to changes in buildings, e.g. with displaceable walls, to changes in use and occupation of the room to be ventilated etc.

It is also known to bring air jets for ventilation purposes applying induction into the room to be ventilated through rather long jet nozzle tubes continuously curved in a converging manner, in which the jet tubes have their inlet opening close to an opposite wall of the air supply channel so as to obtain noise dampening by reflection in that area, as appears from DE-B-1 102 371.

The invention will now be explained in greater detail with reference to the attached drawings, in which:

Fig. 1 is a transverse section through an air supply box of a device according to the invention;

Fig. 2 is a front view of a nozzle element for use therewith;

Fig. 3 is a top view of this nozzle element of Fig. 2;

Fig. 4 is a cross section through a different air supply box with nozzles according to the invention;

Fig. 5 is a cross section along the line V-V in Fig. 4;

Fig. 6 is a cross section along the line VI-VI in Fig. 4; and

Fig. 7 is a combined cross section along the lines VII-VII diametrically opposite each other in Fig. 4;

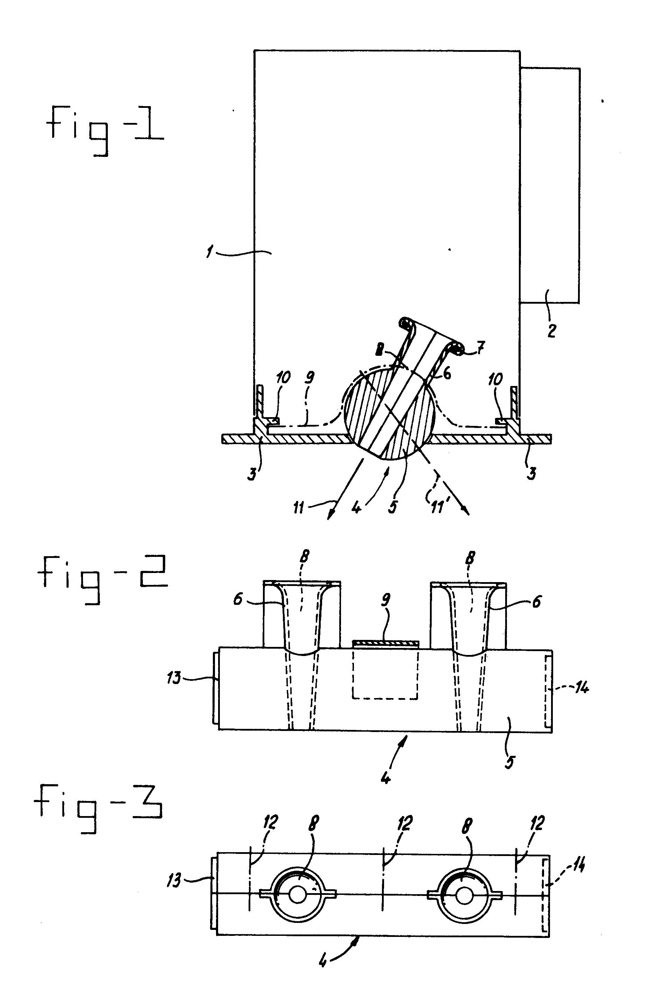

The long  air supply box 1 of Fig. 1 has at one or more points an air supply connection 2, for example to be connected to a duct with fan and, if desired, further air treatment equipment such as cooling, heating and humidification means. The box has means (not shown) for mounting, e.g. for suspension from a ceiling. The lower wall of this box is formed by two long aluminium extrusion sections 3, between which nozzle elements 4 are accommodated. The latter comprise a cylindrical element 5, on which there is a flare 6 which projects inside the box 1 and has a smooth rounded edge 7. Through all this runs a duct 8 for blowing out air from the box to the room to be ventilated below. The element 4 is held in place by, e.g., a spring steel pre-curved retaining clip 9 which grips in a groove between the bottom of each section 3 and an inward-extending rib 10 of each section, and which grips with some spring force outside the flare 6 round the cylindrical element 5. Arrows 11 and 11' indicate how the element 4 can be rotated for the purpose of blowing out in any desired set direction between this.

Figs. 2 and 3 show how a nozzle element 4 can have two flares 6 and ducts 8. This element is here divided along a plane through the axis and bolts 12 connect these parts. The ducts 8 can be formed in through-running pipes, which are clamped between the halves of the element 4. The cylindrical element and the spherical elements according to the invention could be made of plastic and, for example, made integral with the flares 6, or said flares and the ducts 8 could be cast as metal pipes in plastic. Fig. 2 shows the retaining clip 9.

A number of such elements 4 can be fitted one behind the other with the same axis on a box 1. They can also be alternated with elements without nozzle openings, with elements with one or more than two openings etc. If desired, adjacent elements can be centred relative to each other, for example by a projecting stump 13 at one end, sliding so as to fit into a sunken part 14 at the other end of an adjacent element, which also prevents leakage of air between adjacent elements.

In very long air supply boxes 1, a number of sections 3 can be placed in line with each other, and said boxes can also cover large ceiling areas, for example as a closed rectangle or at least made up of parts at an angle. In the corners the sections 3 can then, when mitre-sawed, connect together. At all points where sections 3 adjoin each other, the grooves between the bottoms and the ribs 10 of the sections can be used to place therein a bridging connecting strip, and through slight deformation of, for example, the ribs 10 at some points against such a strip, that strip can be fixed to connect the sections 3 properly.

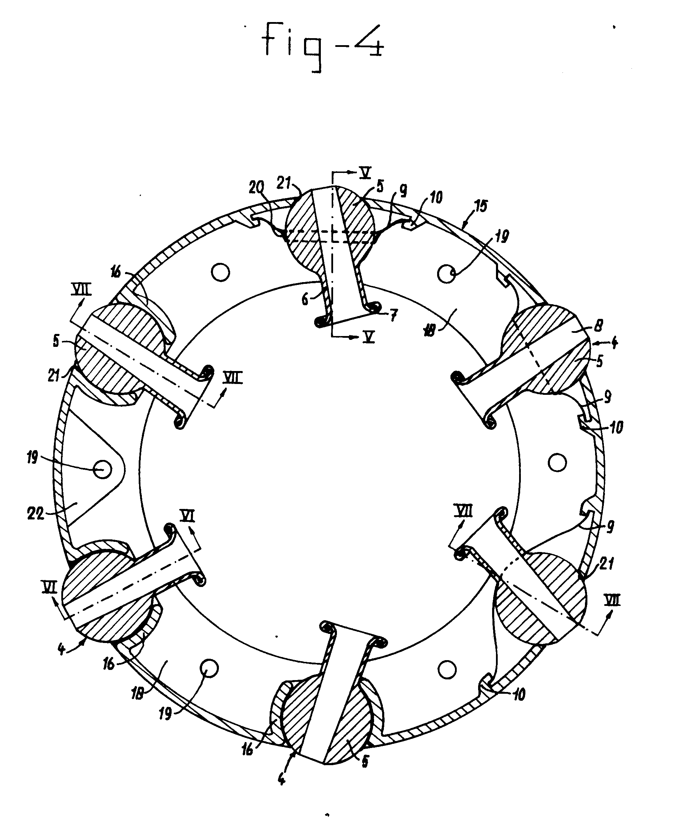

Fig. 4 shows an annular element 15 as part of an air supply box, in which a number of nozzle elements 4, in this case six, are fitted. These can be fitted and retained in various ways. The two lefthand elements and the bottom one are confined between inward-projecting parts 16 of element 15. This can be used both with cylindrical and with spherical parts 5 of the elements 4. The two righthand elements and the top one lie confined between the peripheral wall of the element 15 and a sprung, preformed retaining clip 9, with its end confined in the grooves between said peripheral wall of element 15 and hook-shaped, inward-extending projections 10, in principle corresponding to what is described with reference to Fig. 1.

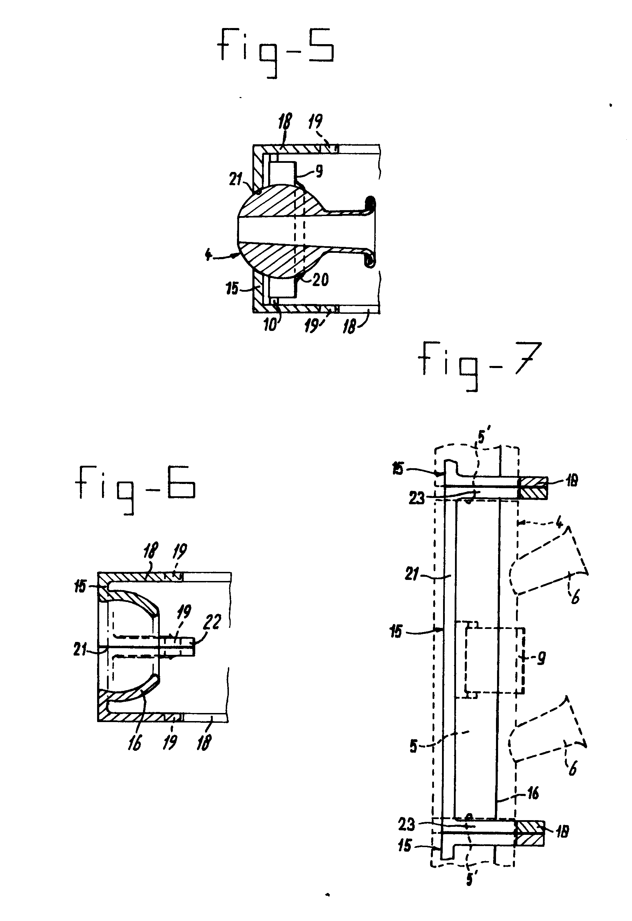

This will be described in greater detail with reference to Figs. 5, 6 and 7.

In Fig. 5 the part 5 of the element 4 is spherical. The element 15 has at the axial ends inward-extending flanges 18 with openings 19, by means of which said element can be connected to a cylindrical connection end of an air box, to another element 15 and/or to an end sealing plate. The retaining clip 9 is designed as a spring steel strip with rectangular outer periphery, preformed as indicated above in Fig. 4 and in Fig. 5, with a central opening which is large enough to be fitted from the inside over the flare 6. This clip has a somewhat spherical or conical-shaped edge 20 around said opening, which gives good contact against the spherical part 5 of the element 4. At 21 there is in the wall of the element 15 a circular opening with spherical or conical edge for good contact of said part 5 against it. That contact is such that the element 4 is held in place with friction in clamping fashion by clip 9, but can be turned without much difficulty.

The clips 9 can easily be deformed in spring fashion by pressing their end edges towards each other, for example with tongs, so that they can snap into the grooves referred to between the wall 15 and the projections 10. The projections 10 can, as shown in Fig. 5, run through entirely between the flanges 18 or can end some distance away from said flanges.

Fig. 6 shows a cross section along the line VI-VI on the left of Fig. 4, for the case where with such a confinement of the part 5 by projecting parts 16 on the element 15 that part 5 is spherical, and where the nozzle element 4 has been left away. That element 4 is then confined in the boundary plane 21 between two adjacent elements 15. In that case those elements 15 do not have in their boundary plane through-running, inward-directed flanges 18, but have, for example, locally between the nozzle elements 4 inward-directed eyes 22 with coinciding openings 19 for clamping the elements 15 together, e.g. with bolts. One such eye 22 is shown in Fig. 4.

Fig. 7 shows a cross section along the two lines VII-VII in Fig. 4 combined, where the nozzle element 4 is cylindrical with two nozzles as in Figs. 2 and 3. Said element 4 is, however, shown only by dotted lines in Fig. 7. The element 15 here again has two through-running, inward-directed flanges 18 in which is disposed an opening 23 which is circular cylindrical. It can be seen here how this element 15 connects on top of and underneath such an element 15 (through interconnection of adjacent flanges 18), and such adjacent elements 15 may, if desired, and as shown, be provided also with such openings to take cylindrical parts 5 of adjacent nozzle elements 4. These nozzle elements of adjacent elements 15 can, however, also be provided in staggered fashion in the peripheral direction, in which case there is opposite an opening 23 in a flange 18 a locally closed flange 18 of an adjacent element.

The openings 23 end, of course, in the outside wall of their element 15 in the opening between the edges 21 thereof, and thus do not cover a full circle, to let the cylindrical elements 5 project somewhat outside element 15. If desired, a simple retaining device can be provided to prevent axial movement of the cylindrical elements 5. Fig. 7 shows a guide part 16 on element 15 between the flanges 18 (as on the left in Fig. 4) and, in dotted lines, a retaining clip 9 as on the right in Fig. 4. These parts 16 and 9 can, however, be left out if the openings 23 in

**0 212 749**

the flanges 18 adequately retain and guide the nozzle element 4. Fig. 7 shows how the element 4 has two flares 6, as in Fig. 2, but at an angle to the perpendicular on the axis of the cylindrical part 5. The elements 4 can be pushed in the direction of the axis of their parts 5 into the openings 23 if the flares 6 can be subsequently introduced, e.g. screwed, into them. It seems more advantageous to interrupt the flanges 18 on the inside of said openings 23, so that said flares 6 can also pass through those flanges 18. Another possibility is where there are no openings 23 and the cylindrical parts 5 are shorter than the internal distance between the flanges 18 (up to dotted lines 5' in Fig. 7), where the elements 4 are provided radially from inside element 15 out against the wall thereof (on the edges 21), leaving out the parts 16.

Another possibility is to divide the element 15 into planes through the axis, to dispose the elements 4 between those parts and to connect those parts then, e.g. with bolts, with a movable retention of the elements 4.

The spherical parts 5 described above can, of course always be positioned either in the peripheral direction or in the axial direction at a variable angle.

If all the nozzle elements 4 are placed in the same tangential direction at an angle, one can with this device generate a regular great swirl about the vertical axis of the element 25 in the room.

The ducts 8 are preferably circular in cross section, but they can also have another cross section, for example oval.

Fig. 4 shows that the extent of projection of the elements 4 outside the periphery of element 15 can vary. The further they project, the more slanting can be their positioning, without blowing against the adjoining edges of the openings in element 15.

CLAIMS

1. Air blow-in device for ventilating air, comprising an air supply box with air blow-out openings to a room to be ventilated, with nozzles forming the blow-out openings the setting of which can be adjusted by turning, characterized in that the rotatable nozzles are formed by a pipe for the air and thereon a cylindrical or spherical part, incorporated in guiding fashion in a part of or on the air supply box, said pipe being much greater in length than the diameter of said cylindrical or spherical part.

2. Device according to Claim 1, in which said nozzle pipe projects essentially on the inside of said air supply box from said cylindrical or spherical part.

3. Device according to one of the preceding claims with cylindrical part on the nozzles, characterized in that more than one nozzle is provided in one cylindrical element.

4. Device according to one of the preceding claims, characterized in that the nozzles are disposed rotatably in an annular wall of an air distribution box, in such a way that they can swing in the tangential direction relative to the ring.

5. Device according to one of the preceding claims, characterized in that a nozzle with a cylindrical part between the adjoining edges of strips running parallel to the axis of that part and bounding the air supply box is provided and rests against those edges.

6. Device according to one of the preceding claims, characterized in that said cylindrical or spherical part is held in place by one or more retaining strips against edge parts of the air supply box.

7. Device according to Claim 6, characterized in that said edge parts of the air box have projecting hook-shaped parts which serve to confine the ends of said retaining strips on the air supply box in the space within those hook-shaped parts.

8. Device according to one of the preceding claims, characterized in that a number of cylindrical parts with nozzles are axially in line with one another and between cylindrical parts with nozzles there are cylindrical parts without nozzles in the same axis.

9. Device according to Claim 8, <u>characterized in that</u> adjoining cylindrical parts with axially projecting and recessed edges are centred relative to one another.

10. Device according to Claim 4 and possibly one of Claims 5 to 9, <u>characterized in that</u> said annular wall has inward-extending flanges with which it can be attached to other parts of the air supply box.

11. Device according to Claim 10, <u>characterized in that</u> said flanges have openings for accommodating in rotatably guiding fashion therein cylindrical parts with nozzles.

12. Device according to Claim 4 and possibly one of Claims 6, 7 or 10, <u>characterized in that</u> two annular walls with the same axis and external periphery connect together in a plane through the centre of a number of spherical nozzle parts of the type described.

Fig-1

Fig-2

Fig-3

Fig-4

Fig-5

Fig-7

Fig-6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | FR-A-2 374 597 (HESS & CIE, PILGERSTEG) * Page 1, lines 1-32; figures 1-4 * | 1-3 | F 24 F 13/065 F 24 F 13/00 |
| A,D | | 4-7 | |
| | --- | | |
| Y,D | DE-B-1 102 371 (SULZER) * Column 1, lines 31-43; figure 2 * | 1-3 | |
| | --- | | |
| A,D | FR-A-2 183 940 (LTG) * Figures 1,2 * | 7-9 | |
| | ----- | | |

**TECHNICAL FIELDS SEARCHED (Int. Cl.4)**

F 24 F
B 60 H

The present search report has been drawn up for all claims

| Place of search | Date of completion of the search | Examiner |
|---|---|---|
| THE HAGUE | 17-11-1986 | PESCHEL G. |